# FASCICULE DE BREVET EUROPEEN

(11) **EP 0 962 890 B1**
(45) Date de publication et mention de la délivrance du brevet: **18.08.2004**
(21) Numéro de dépôt: 99401309.2
(22) Date de dépôt: 01.06.1999
(51) Int. Cl.: G06T 7/20

(54) **Procédé de suivi dynamique de l'évolution de milieux déformables, et de prédiction de leur évolution**
Verfahren zur dynamischen Folgerung der Entwicklung von Strukturen und Entwicklungsprediktion
Process for dynamic following of the evolution of deformable structures and evolution prediction

(30) Priorité: 05.06.1998 FR 9807095
(43) Date de publication de la demande: 08.12.1999
(73) Titulaire: Thales, 75008 Paris (FR)
(72) Inventeur: Barbaresco, Frédéric, 94117 Arcueil Cedex (FR); Legoupil, Samuel, 94117 Arcueil Cedex (FR); Monnier, Bernard, 94117 Arcueil Cedex (FR)
(74) Mandataire: Chaverneff, Vladimir

(56) Documents cités:
- YAHIA H M ET AL: "Fast and robust level-set segmentation of deformable structures" PROCEEDINGS OF THE 1998 IEEE INTERNATIONAL CONFERENCE ON ACOUSTICS, SPEECH AND SIGNAL PROCESSING, ICASSP '98 (CAT. NO.98CH36181), PROCEEDINGS OF THE 1998 IEEE INTERNATIONAL CONFERENCE ON ACOUSTICS, SPEECH AND SIGNAL PROCESSING, SEATTLE, WA, USA, 12-1, pages 2765-2768 vol.5, XP002090822 ISBN 0-7803-4428-6, 1998, New York, NY, USA, IEEE, USA
- S LEGOUPIL ET AL.: "Matching of curvilinear structures: Application to the Identification of Cortical Sulci on 3D magnetic resonance brain image" PATTERN RECOGNITION IN PRACTICE IV: MULTIPLE PARADIGMS, COMPARATIVE STUDIES AND HYBRID SYSTEMS; PROCEEDINGS OF AN INTERNATIONAL WORKSHOP ; VLIELAND, THE NETHERLANDS, 1-3-JUNE 1994; ELSEVIER, AMSTERDAM, pages 185-195, XP002090823
- TOM B C S ET AL: "MOTION ESTIMATION OF SKELETONIZED ANGIOGRAPHIC IMAGES USING ELASTIC REGISTRATION" IEEE TRANSACTIONS ON MEDICAL IMAGING, vol. 13, no. 3, septembre 1994 (1994-09), pages 450-460, XP000474135
- BRIGGER P ET AL: "MORPHOLOGICAL SHAPE REPRESENTATION OF SEGMENTED IMAGES BASED ON TEMPORARILY MODELED MOTION VECTORS" PROCEEDINGS OF THE INTERNATIONAL CONFERENCE ON IMAGE PROCESSING (IC, AUSTIN, NOV. 13 - 16, 1994, vol. 3, no. CONF. 1, 13 novembre 1994 (1994-11-13), pages 756-760, XP000522899 INSTITUTE OF ELECTRICAL AND ELECTRONICS ENGINEERS
- ZIHENG ZHOU ET AL: "Generic ribbons: a morphological approach towards natural shape decomposition" VISUAL COMMUNICATIONS AND IMAGE PROCESSING IV, PHILADELPHIA, PA, USA, 8-10 NOV. 1989, vol. 1199, pt.1, pages 170-180, XP002090824 ISSN 0277-786X, Proceedings of the SPIE - The International Society for Optical Engineering, 1989, USA

## Description

La présente invention se rapporte à un procédé de suivi dynamique de l'évolution de milieux déformables, et de prédiction de leur évolution.

Dans des domaines tels que le contrôle du trafic aérien, il est important non seulement de suivre les trajectoires des aéronefs pour les guider, mais également de connaître les conditions météorologiques dans le rayon d'action des instruments permettant ce contrôle, et en particulier de détecter et de localiser avec précision les formations nuageuses pouvant être dangereuses ou simplement désagréables pour les occupants des aéronefs. A cet effet, on utilise généralement des radars météorologiques, dont les images d'échos sont affichées sur l'écran du centre de contrôle, après élimination des échos dus à des obstacles fixes. L'interprétation humaine de telles images est souvent complexe, et ces images ne permettent pas d'établir de prévisions d'évolution des formations nuageuses. En outre, pour un contrôleur de trafic aérien, il est nécessaire de connaître les conditions météorologiques et leur évolution pour pouvoir optimiser le routage des avions qu'il est chargé de guider et pour comprendre les éventuels changements de route décidés par le commandant de bord pour éviter des formations nuageuses qu'il estime être dangereuses. On connaît d'après l'article de F. BARBARESCO, S. BONNEY, J. LAMBERT, et B. MONNIER paru dans IEEE International Conference on Image Processing - I.C.I.P. 96 , à Lausanne (Suisse) en Septembre 1996 et , intitulé « Motion Based Segmentation and Tracking of Dynamic Radar Clutter » un procédé de traitement de telles images par détermination de contours actifs à modèle contraint, mais ce procédé présente deux inconvénients : il exige un temps de calcul prohibitif, et il ne gère pas les déformations complexes (mais seulement celles pouvant s'approximer par un modèle affine de déformation.

La présente invention a pour objet un procédé de suivi dynamique de l'évolution de milieux déformables qui permette de réaliser ce suivi et d'établir des prévisions relativement fiables de l'évolution de leur déformation, sans nécessiter de temps de calcul prohibitif.

Le procédé de l'invention, assurant le suivi dynamique de milieux déformables consiste, à partir d'au moins deux images temporellement espacées, obtenues par au moins un capteur, à établir pour chaque image le squelette de chaque ensemble distinct de ce milieu, et à procéder à une mise en correspondance des squelettes des images en question.

Pour effectuer la mise en correspondance, on vectorise les squelettes des images traitées, on examine les vecteurs pris deux à deux de ces squelettes et on cherche à apparier à chaque fois deux vecteurs possédant sensiblement les mêmes caractéristiques géométriques. A partir de ces squelettes appariés, on peut reconstruire les squelettes des ensembles et le cas échéant, les ensembles correspondants.

De façon avantageuse, on procède à un prétraitement d'image avant l'établissement des squelettes, ce prétraitement pouvant comporter des étapes de filtrage (fréquentiel et/ou morphologique), de seuillage et d'élimination de composantes d'image sans intérêt pour le problème posé. Pour faciliter le traitement, on peut avantageusement simplifier les squelettes par vectorisation (amincissement et/ou recherche de points où les courbes représentatives des squelettes ont une courbure supérieure à une valeur déterminée puis linéarisation) et/ou élimination des artefacts ou barbules non significatives.

Selon un aspect du procédé de l'invention, on établit une cartographie de vecteurs de déplacement pour au moins une zone d'intérêt des images traitées.

Selon un autre aspect de l'invention, on reconstruit, à partir des vecteurs de déplacement et à partir du squelette, une image prédite. Une autre possibilité de reconstruction d'image prédite est de calculer, à partir des vecteurs de déplacement des squelettes, le déplacement de chacun des pixels de l'image, et de reconstruire à partir des nouveaux emplacements prédits les pixels de l'image prédite.

Selon encore un autre aspect du procédé de l'invention, on applique des attributs à au moins une partie des pixels de plusieurs images temporellement espacées, on détermine les caractéristiques des zones correspondantes, et on enrichit ainsi l'information sur l'évolution des zones et/ou leur nature. Ces attributs sont notamment: l'évolution de la surface ou du volume des milieux déformables, leur densité, la variation locale de la densité à l'intérieur de ces milieux.

La présente invention sera mieux comprise à la lecture de la description détaillée d'un mode de mise en oeuvre, pris à titre d'exemple non limitatif et illustré par le dessin annexé, sur lequel :
- la figure 1 est un schéma simplifié d'un écran de visualisation de radar météorologique, sur lequel ont été représentés les squelettes de plusieurs formations nuageuses, établis conformément à l'invention, et
- la figure 2 représente des vues schématiques montrant des mises en correspondance entre des squelettes d'images radar décalées dans le temps, conformément à l'invention, et ce, pour différents cas d'évolution des formations nuageuses.

L'invention est décrite en détail ci-dessous pour l'application à des radars météorologiques, mais il est bien entendu qu'elle n'est pas limitée à cette seule application, et qu'elle peut être mise en oeuvre dans de nombreux autres domaines dans lesquels on assure le suivi dynamique de milieux déformables pour lesquels on peut disposer de données ( par exemple: formes de signaux, images, ...) obtenues à l'aide d'au moins un capteur approprié, milieux dont on peut, le cas échéant, avoir besoin de prédire l'évolution. Par « milieu déformable », on entend ici un ensemble de particules et/ou des groupes de particules et/ou des ensembles d'objets et/ou d'organismes, pouvant être gazeux et/ou liquides et/ou solides, ces éléments évoluant de façon inhomogène dans le temps, avec des gradients de déformation pouvant varier dans le temps et/ou d'un ensemble à l'autre.

Parmi les différents autres domaines auxquels l'invention peut s'appliquer, on citera notamment:
- l'observation spatiale : suivi des phénomènes naturels et/ou dus à l'homme, tels que les inondations, la couverture neigeuse, la désertification des sols arables ou leur mise en culture, les pollutions fluviales ou maritimes (par hydrocarbures, ...), ...
- l'océanographie : suivi de l'évolution du gradient de température des océans (fronts, tourbillons, courants sous-marins, ...) sur des images spatiales infrarouges ou en proche ultraviolet (à cause du phyto-plancton). Les informations recueillies sont intéressantes pour la météorologie marine, ainsi que pour la modélisation de la propagation des ondes sonar (communications et détection des sous-marins...),
- le domaine médical : pour le traitement des images médicales (I.R.M., tomographie ..), pour le suivi des pathologies : étude de la dynamique du coeur, suivi de l'activité cérébrale, suivi de l'évolution des tumeurs...
- la mécanique des fluides : suivi des volutes (par coloration) des écoulements instationnaires tels que ceux se produisant le long d'une paroi, ou l'injection de carburant dans une chambre de combustion, ...

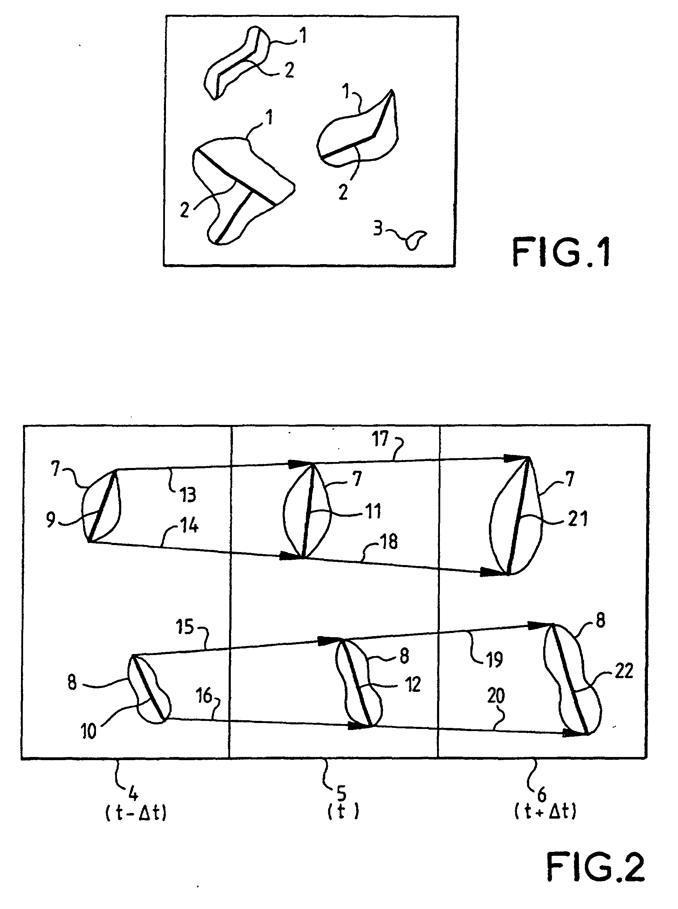

On a représenté en figure 1 les contours de quelques formations nuageuses 1, telles que relevées à l'aide d'un radar météorologique et visualisées sur un écran, par exemple un écran de poste de contrôle de trafic aérien. L'image ainsi visualisée a été pré-traitée, de façon connue en soi, pour en éliminer, le cas échéant, tout fouillis de sol (dû au relief, à la houle, à des obstacles fixes).

Pour chacune de ces formations nuageuses, on a tracé le squelette correspondant 2. Bien entendu, on ne se préoccupe pas des formations nuageuses 3 d'intensité de réflexion radar négligeable qui ne peuvent présenter aucun risque à l'instant considéré. Le calcul des squelettes de contours fermés est connu en soi : on peut par exemple mettre en oeuvre l'algorithme de Danielson (voir l'article « Euclidean Distance Mapping », paru dans la revue Computer Graphics & Image processing, volume 14, pages 227-248, 1980), ou bien l'algorithme de l'érodé ultime (morphologie mathématique).

On notera que les images mentionnées ci-dessus sont bi-dimensionnelles, mais il est bien entendu que pour obtenir des informations tri-dimensionnelles on peut, par exemple, étudier une succession d'images bi-dimensionnelles parallèles entre elles (découpant les masses nuageuses en « tranches ») ou bien traiter des squelettes en 3D.

Cette première étape peut être utilisée pour compresser les données relatives à une image. Il suffit alors d'établir les squelettes des différents ensembles de l'image, comme exposé ci-dessus, et de ne garder que les informations relatives à ces squelettes. Bien entendu, une telle compression entraîne une certaine perte de données.

On va maintenant exposer la deuxième étape du procédé de l'invention, à savoir la mise en correspondance des squelettes obtenus pour des images successives d'une même zone de l'espace.

Sur la figure 2, on a représenté trois telles images successives, référencées 4, 5 et 6, et relatives à des phénomènes nuageux respectivement relevés par un radar météorologique à des instants t-Δt, t, t + Δt (t est l'instant auquel on se place pour analyser la situation courante). Dans le cas présent, le laps de temps Δt est égal à quelques minutes, par exemple 5 minutes, mais il est bien entendu que, selon les phénomènes observés et selon les domaines d'application du procédé, ce laps de temps peut être différent, en fonction de la vitesse d'évolution des phénomènes concernés et de la résolution requise.

Sur l'image 5, relative à l'instant t, on a représenté les contours de deux formations nuageuses 7, 8. On constate que sur l'image 4, obtenue quelques minutes avant l'instant t, c'est-à-dire à l'instant t-Δt, les formations 7 et 8 apparaissent également, mais sont plus rapprochées l'une de l'autre qu'à l'instant t, et ont des dimensions légèrement inférieures à celles des mêmes formations à l'instant t.

Pour la mise en oeuvre du procédé de l'invention, on trace d'abord les squelettes respectifs 9, 10 des formations 7, 8, pour l'instant t-Δt, et 11,12 pour l'instant t. Ensuite, on procède à la « mise en correspondance » de ces squelettes. Pour ce faire, et comme illustré de façon didactique en figure 2, on relie par des vecteurs 13 à 16 les extrémités correspondantes des squelettes 9 à 12, les images 4 et 5 étant mises côte-à-côte, l'image 5 étant à droite de l'image 4. Ainsi, le vecteur 13 relie l'extrémité « supérieure » du squelette 9 à celle du squelette 11, le vecteur 14 relie l'extrémité « inférieure » du squelette 9 à celle du squelette 11, et on procède de même pour les squelettes 10 et 12, pour obtenir les vecteurs 15 et 16. L'exemple de la figure 2 est très simplifié, les squelettes 9 à 12 étant presque rectilignes, mais il est bien entendu que si les squelettes avaient des formes plus complexes, on procéderait de façon analogue, en reliant par un plus grand nombre de vecteurs les points caractéristiques correspondants des squelettes (extrémités et points de jonction de segments de squelettes). Les détails de mise en oeuvre de cette mise en correspondance sont connus en soi, par exemple par l'article de S. LEGOUPIL & al., « Matching of Curvilinear Structures : Application to the Identification of Cortical Sulci on 3D magnetic Resonance Brain Image », Pattern Recognition in Practice IV, E.S. Gelsema & L.N. Kanal, pp. 185-195, Elsevier Science B.V., 1994.

Pour obtenir le squelette de l'instant t + Δt (de l'image 6, mise côte-à-côte avec l'image 5, à sa droite), on prolonge chacun des vecteurs 13 à 16 d'une longueur égale à lui-même, respectivement, et on obtient ainsi les vecteurs 17 à 20. En reliant les extrémités des vecteurs 17 et 18, on obtient le squelette 21, et en reliant celles des vecteurs 19 et 20, on obtient le squelette 22. Dans le cas de la figure 2, les vecteurs 13 et 14 sont légèrement divergents vers la droite, de même que les vecteurs 15, 16, ce qui fait que les squelettes 11, 12 sont légèrement plus longs que les squelettes 9,10 respectivement. Il en résulte que les squelettes 21, 22 sont plus grands que les squelettes 11, 12 respectivement, et que par conséquent les formations nuageuses correspondantes s'agrandissent de (t-Δt) à (t) et de (t) à (t + Δt). Bien entendu, l'image 6 n'est qu'une prévision calculée à l'instant (t), et elle peut être corrigée, le cas échéant, grâce aux mesures effectuées à l'instant (t + Δt), pour permettre de calculer des prévisions pour l'instant (t + 2 Δt).

L'image 6 de la figure 2 a été obtenue, pour l'exemple décrit ci-dessus, par extrapolation linéaire, mais il est bien entendu que d'autres types d'extrapolations, non linéaires, sont possibles, en particulier lorsque l'on constate que les images prévisionnelles sont très différentes des images mesurées, à cause d'un gradient d'évolution de la taille des squelettes et de déformations), et il est également bien entendu que si de forts gradients d'évolution apparaissent, les intervalles de temps Δt peuvent être diminués, et que si les gradients varient, l'extrapolation peut être adaptative.

Dans d'autres cas, des formations nuageuses peuvent disparaître (ou bien l'amplitude de leur écho radar peut devenir négligeable). Leurs représentations sur les images disparaissent également, ce qui peut permettre, le cas échéant, de rectifier les prévisions concernant les zones voisines. Inversement, des formations nuageuses peuvent apparaître, et dès que l'amplitude de leur écho radar dépasse une valeur déterminée expérimentalement, on peut tracer le squelette correspondant et le modifier en fonction de l'évolution de ces masses nuageuses.

Bien entendu, les images à traiter pour obtenir les squelettes peuvent subir différents prétraitements appropriés, connus en soi. Parmi ces prétraitements, on peut citer: le seuillage et le filtrage (fréquentiel et/ou morphologique), afin d'éliminer des parasites tels que ceux dus au bruit de fond, l'élimination des composantes sans intérêt pour le problème posé (en particulier, élimination des composantes statiques des images).

Les squelettes obtenus peuvent être simplifiés par vectorisation (amincissement, recherche de points de forte courbure du squelette, linéarisation), et on peut en éliminer les barbules non significatives ou différents artefacts.

A partir des squelettes ainsi obtenus, il est facile, si nécessaire, de tracer, de manière connue en soi, les contours correspondants des formations nuageuses. On a expliqué ci-dessus comment reconstruire une image prédite à partir des squelettes prédits. Une autre possibilité est d'utiliser le champ de vecteurs de déplacement (tels que les vecteurs 17 à 20 de la figure 2), et appliquer ces vecteurs de déplacement à tous les pixels de l'image (ou tout au moins à tous les pixels des zones dans lesquelles peuvent évoluer les formations nuageuses). On reconstitue alors l'image prédite en plaçant les pixels à leur nouvel emplacement, tel que déterminé par ces vecteurs.

Les opérations mentionnées ci-dessus peuvent, bien entendu, être effectuées en trois dimensions (3D). Dans ce cas, soit l'espace observé est découpé en « tranches » parallèles entre elles et perpendiculaires à la direction d'observation, soit les données fournies par le radar sont sous forme 3D (relevés effectués pour différentes cases distance pour différents angles de site).

Ainsi, grâce au procédé de l'invention, l'information de forme (forme des nuages dans l'exemple décrit ci-dessus) est compressée (les données nécessaires pour coder les squelettes sont beaucoup moins nombreuses qu'avec les procédés connus), ce qui permet de traiter plus rapidement les images. Les déplacements et déformations des nuages sont plus faciles à analyser et à extrapoler pour des prévisions plus fiables. La représentation sous forme d'approximation polygonale de squelette (en particulier le tronc du squelette) est plus stationnaire que la représentation sous forme d'approximation polygonale des contours. On bénéficie de ces avantages dans les autres domaines possibles d'application, dont certains ont été cités ci-dessus.

## Revendications

1. Procédé de suivi dynamique de l'évolution de milieux déformables, **caractérisé en ce qu'**il consiste, à partir d'au moins deux images temporellement espacées, obtenues par au moins un capteur, à établir pour chaque image (4, 5, 6) le squelette (9, 10, 11, 12, 21, 22) de chaque ensemble distinct de ce milieu (7, 8), et à procéder à une mise en correspondance des squelettes (13 à 16, 17 à 20) des images en question.

2. Procédé selon la revendication 1, **caractérisé en ce que** pour effectuer la mise en correspondance, on vectorise les squelettes des images traitées, on examine les vecteurs, pris deux à deux, de ces squelettes et on cherche à apparier à chaque fois deux vecteurs possédant sensiblement les mêmes caractéristiques géométriques.

3. Procédé selon l'une des revendications 1 ou 2, **caractérisé en ce que** l'on établit une cartographie de vecteurs de déplacement de pixels pour au moins une zone d'intérêt des images traitées.

4. Procédé selon la revendication 2, **caractérisé en ce que** pour reconstruire une image prédite, on reconstruit ses squelettes à l'aide des vecteurs de déplacement appliqués aux squelettes correspondants d'une image existante, et qu'à partir des squelettes reconstruits, on reconstruit les ensembles correspondants.

5. Procédé selon la revendication 4, **caractérisé en ce que** l'on applique les vecteurs de déplacement à chaque pixel d'une image pour calculer une image prédite.

6. Procédé selon l'une des revendications précédentes, **caractérisé en ce que** l'on applique des attributs à au moins une partie des pixels de plusieurs images temporellement espacées, que l'on détermine les caractéristiques des zones correspondantes, et qu'à partir de ces caractéristiques on affine les prédictions d'évolution de ces zones.

7. Procédé selon l'une des revendications précédentes, **caractérisé en ce qu'**on effectue un prétraitement d'image avant l'établissement des squelettes.

8. Procédé selon la revendication 7, **caractérisé en ce que** le prétraitement comporte au moins l'un des processus suivants: filtrage fréquentiel, filtrage morphologique, seuillage, élimination de composantes d'image sans intérêt pour le problème posé.

9. Procédé selon l'une des revendications précédentes, **caractérisé en ce que** l'on simplifie les squelettes par vectorisation et/ou élimination des artefacts ou barbules non significatives.

10. Procédé selon la revendication 1, pour la compression de données d'au moins une image, **caractérisé en ce que** l'on établit les squelettes des différents ensembles de l'image, et que l'on ne garde que les informations relatives à ces squelettes.

## Patentansprüche

1. Verfahren zum dynamischen Verfolgen der Entwicklung von verformbaren Milieus, **dadurch gekennzeichnet, dass** es darin besteht, auf der Basis von zwei zeitlich beabstandeten Bildern, die durch zumindest einen Aufnehmer erhalten werden, für jedes Bild (4, 5, 6) das Skelett (9, 10, 11, 12, 21, 22) von jeder unterscheidbaren Einheit dieses Milieus (7, 8) zu erstellen und eine Zuordnung der Skelette (13 bis 16, 17 bis 20) der betreffenden Bilder zueinander durchzuführen.

2. Verfahren nach Anspruch 1, **dadurch gekennzeichnet, dass** zur Durchführung der Zuordnung die Skelette der verarbeiteten Bilder vektorisiert werden, die Vektoren dieser Skelette paarweise untersucht werden und man jedes Mal zwei Vektoren zu paaren versucht, die die im Wesentlichen gleichen geometrischen Eigenschaften besitzen.

3. Verfahren nach einem der Ansprüche 1 oder 2, **dadurch gekennzeichnet, dass** man eine Kartographie der Verschiebungsvektoren von Pixeln für zumindest einen interessanten Bereich der verarbeiteten Bilder erstellt.

4. Verfahren nach Anspruch 2, **dadurch gekennzeichnet, dass** zur Rekonstruktion eines Vorhersagebildes seine Skelette mittels Verschiebungsvektoren rekonstruiert werden, die auf die entsprechenden Skelette eines existierenden Bildes angewandt werden, und dass auf der Basis der rekonstruierten Skelette die entsprechenden Einheiten rekonstruiert werden.

5. Verfahren nach Anspruch 4, **dadurch gekennzeichnet, dass** die Verschiebungsvektoren auf jedes Pixel eines Bildes angewandt werden, um ein Vorhersagebild zu berechnen.

6. Verfahren nach einem der vorhergehenden Ansprüche, **dadurch gekennzeichnet, dass** zumindest einem Teil der Pixel von mehreren zeitlich beabstandeten Bildern Attribute zugeordnet werden, dass die Eigenschaften der entsprechenden Bereiche bestimmt werden und dass auf der Basis dieser Eigenschaften die Evolutionsprediktionen dieser Bereiche verfeinert werden.

7. Verfahren nach einem der vorhergehenden Ansprüche, **dadurch gekennzeichnet, dass** vor der Erstellung der Skelette eine Bildvorverarbeitung durchgeführt wird.

8. Verfahren nach Anspruch 7, **dadurch gekennzeichnet, dass** die Vorverarbeitung zumindest einen der folgenden Prozesse umfasst: Frequenzfilterung, morphologische Filterung, Filterung bezüglich Grenzwert, Eliminierung von für das gestellte Problem uninteressanten Bildbestandteilen.

9. Verfahren nach einem der vorhergehenden Ansprüche, **dadurch gekennzeichnet, dass** die Skelette durch Vektorisierung und/oder Eliminierung von Artefakten oder insignifikanten Mustern vereinfacht werden.

10. Verfahren nach Anspruch 1, für die Kompression von Daten zumindest eines Bildes, **dadurch gekennzeichnet, dass** die Skelette von verschiedenen Einheiten des Bildes erstellt werden und dass nur die diese Skelette betreffenden Informationen beibehalten werden.

## Claims

1. Process for the dynamic monitoring of changes to deformable media, **characterized in that** it consists, on the basis of at least two temporally spaced images, obtained by at least one sensor, in establishing for each image (4, 5, 6) the skeleton (9, 10, 11, 12, 21, 22) of each distinct assemblage of this medium (7, 8), and in carrying out a matching of the skeletons (13 to 16, 17 to 20) of the images in question.

2. Process according to Claim 1, **characterized in that** to perform the matching, the skeletons of the processed images are vectorized, the vectors, taken two by two, of these skeletons are examined and an attempt is made to pair on each occasion two vectors possessing substantially the same geometrical characteristics.

3. Process according to one of Claims 1 to 2, **characterized in that** a mapping of displacement vectors of pixels is established for at least one zone of interest of the processed images.

4. Process according to Claim 2, **characterized in that** to reconstruct a predicted image, its skeletons are reconstructed with the aid of the displacement vectors applied to the corresponding skeletons of an existing image, and that on the basis of the reconstructed skeletons, the corresponding assemblages are reconstructed.

5. Process according to Claim 4, **characterized in that** the displacement vectors are applied to each pixel of an image to calculate a predicted image.

6. Process according to one of the preceding claims, **characterized in that** attributes are applied to at least part of the pixels of several temporally spaced images, that the characteristics of the corresponding zones are determined, and that on the basis of these characteristics the predictions of changes to these zones are refined.

7. Process according to one of the preceding claims, **characterized in that** an image preprocessing is performed before the establishing of the skeletons.

8. Process according to claim 7, **characterized in that** the preprocessing comprises at least one of the following procedures: frequency filtering, morphological filtering, thresholding, elimination of image components of no interest for the problem posed.

9. Process according to one of the preceding claims, **characterized in that** the skeletons are simplified by vectorization and/or elimination of insignificant artefacts or barbules.

10. Process according to Claim 1, for the data compression of at least one image, **characterized in that** the skeletons of the various assemblages of the image are established, and that only the information relating to these skeletons is kept.
